(19) Europäisches Patentamt
European Patent Office
Office européen des brevets

(11) **EP 1 784 973 B1**

(12) **FASCICULE DE BREVET EUROPEEN**

(45) Date de publication et mention
de la délivrance du brevet:
**02.09.2009 Bulletin 2009/36**

(51) Int Cl.:
***H04N 1/405*** *(2006.01)*

(21) Numéro de dépôt: **05766720.6**

(86) Numéro de dépôt international:
**PCT/FR2005/050395**

(22) Date de dépôt: **31.05.2005**

(87) Numéro de publication internationale:
**WO 2006/018554 (23.02.2006 Gazette 2006/08)**

(54) **PROCÉDÉ DE TRAMAGE D'UNE D'IMAGE**

RASTERUNGSVERFAHREN FÜR BILDER

METHOD FOR SCREENING AN IMAGE

(84) Etats contractants désignés:
**DE ES GB IT**

(30) Priorité: **28.07.2004 FR 0451695**

(43) Date de publication de la demande:
**16.05.2007 Bulletin 2007/20**

(73) Titulaire: **SAGEM COMMUNICATIONS SAS
75015 Paris (FR)**

(72) Inventeurs:
• **OSTROMOUKHOV, Victor
Outremont, Québec H2V 3P3 (CA)**
• **MONNERIE, Nicolas
F-21800 QUETIGNY (FR)**

(74) Mandataire: **Schmit, Christian Norbert Marie
SCHMIT CHRETIEN
8, place du Ponceau
95000 Cergy (FR)**

(56) Documents cités:
**EP-A- 1 111 905          US-A- 4 894 726
US-A1- 2003 123 093**

• **GLASSNER A: "PENROSE TILING" IEEE
COMPUTER GRAPHICS AND APPLICATIONS,
IEEE INC. NEW YORK, US, vol. 18, no. 4, juillet
1998 (1998-07), pages 78-86, XP000927332 ISSN:
0272-1716**
• **ULICHNEY R A: "DITHERING WITH BLUE NOISE"
PROCEEDINGS OF THE IEEE, IEEE. NEW YORK,
US, vol. 76, no. 1, 1988, pages 56-79, XP002034911
ISSN: 0018-9219**

EP 1 784 973 B1

**Description**

La présente invention a pour objet un procédé de tramage d'une image.

Le domaine de l'invention est celui du rendu des images notamment lors de l'impression de ces images. Plus particulièrement le domaine de l'invention est celui de l'impression en demi ton consistant à imprimer une image stockée en mémoire dans un format dit en nuance de gris, ce terme étant étendu aux images en couleurs celle-ci étant en fait composée de la superposition de trois images monochromatiques. Encore plus particulièrement le domaine de l'invention est celui des imprimantes telles que celles que l'on trouve par exemple sur les appareils de réception de fax.

Dans l'état de la technique, les méthodes de rendu en demi ton les plus utilisés sont celles par diffusion d'erreur ou par matrice de seuillage.

Les matrices de seuillage peuvent être de nature dispersée, regroupée ou être un masque de bruit bleu. Les méthodes basées sur les matrices ont de bonnes performances en termes de rapidité de traitement mais souffrent d'apparitions de structures régulières.

La méthode par diffusion d'erreur souffre de l'apparition d'artefact de structure, notamment de vagues. Les vagues caractérisent les artefacts liés aux structures répétitives, notamment celles obtenues par les matrices. Les artefacts de structure se manifestent comme des changements de formes apparemment irrégulières, bien visibles a l'oeil nu. Cela peut être résolu par la mise en oeuvre d'un parcours de l'image en mode serpentin, correspondant à un changement de sens de traitement de l'image à chaque ligne de l'image. On parle aussi de parcours bidirectionnel de l'image. Cependant ce mode impose de maintenir un gros volume de données en mémoire pendant le traitement de l'image, ce qui rend une implémentation électronique, via un circuit spécialisé dédié, difficile.

De plus, dans les chaînes de traitement d'images des circuits d'impression embarqués, le traitement par bloc d'une image est le mode le plus optimisé, notamment pour la réalisation de circuits spécialisés. Or un tel traitement par bloc s'adapte mal aux algorithmes de diffusion d'erreur à cause de l'utilisation du mode serpentin. Chang et Allebach ont proposé un algorithme de tramage par bloc, mais cet algorithme a une implémentation complexe et demande de longues phases de réglage et beaucoup de savoir-faire pour donner de bon résultat.

L'invention permet de résoudre ces problèmes en proposant un algorithme équivalent à la mise en oeuvre d'une diffusion d'erreur selon un parcours unidirectionnel de l'image. Dans l'invention on réalise un pavage apériodique d'une image, le résultat de ce pavage étant un nuage de points, correspondant à des structures d'échantillonnage du pavage. Ce pavage est de plus adaptatif en ce sens que sa densité dépend de l'intensité de l'image. Dans ce document on considère que l'intensité de l'image est liée au codage des points de l'image. Ces points ou pixels étant, par exemple, codé par un nombre compris dans l'intervalle [0, 255]. Plus un pixel est codés par une valeur grande, plus son intensité est importante. Le pavage est réalisé par la subdivision d'une structure de manière auto-similaire. A chaque subdivision les nouvelles structures sont nommées (on leur affecte un label) en fonction du label de la structure subdivisée. A la fin du pavage, chaque structure a donc un label. Ce label est utilisé d'une part pour déterminer un seuil affecté à la structure, d'autre part comme entrée dans une table de correction à double entrées. L'autre entrée de la table de correction dépend de l'intensité du pixel considéré. La table de correction comporte des vecteurs permettant le réajustement du point avant impression. Le résultat est une image imprimée ne comportant plus aucun artefact détectable par l'oeil humain.

Un pavage est dit apériodique si les fréquences d'apparition des éléments qui le constituent ne peuvent être exprimées à l'aide de rapports de nombres entiers. De manière équivalente on dit aussi qu'un pavage est apériodique si aucun pavage périodique n'est possible a partir du jeu de tuiles de base qui constitue le pavage. Le pavage est dit périodique lorsqu'il admet une symetrie translationnelle d'un vecteur fini.

L'invention a donc comme objet un procédé de tramage d'une image avant impression **caractérisé en ce qu**'il comporte les étapes suivantes, mises en oeuvre par un dispositif de tramage:

- pavage de l'image à tramer par une structure apériodique obtenue par la mise en oeuvre d'une structure auto-similaire, c'est-à-dire que le pavage est réalisé à partir d'une structure divisée selon des règles de manière à donner de nouvelles structures qui sont à nouveau divisé selon ces mêmes règles, parmi les structures on distingue des structures d'échantillonnage et des structures de subdivision, les structures d'échantillonnage étant assimilables à des points, seules les structures de subdivision sont à nouveau divisées.
- le pavage est adaptatif car dépendant de l'intensité de la zone de l'image couverte par la structure à diviser, la division de la structure étant interrompue lorsque que cette intensité devient inférieure à un seuil prédéterminé,
- la division est interrompue lorsque la densité de structure par unité de surface de l'image devient supérieure à un seuil,
- lors de chaque division le dispositif de tramage affecte un label à chaque nouvelle structure, ainsi qu'aux structures d'échantillonnage existantes.
- à la fin du processus de pavage chaque structure d'échantillonnage est associée à un pixel qui est déplacée en fonction d'un vecteur de correction trouvé dans une table correction à double entrée, la première des entrées étant le label de la structure d'échantillonnage, la seconde des entrées étant l'intensité de l'image au point correspondant à la structure d'échantillonnage, chaque structure d'échantillonnage restant associé au point de l'image lui ayant servi d'entrée dans la table de correction,
- à chaque structure d'échantillonnage est associé un seuil en fonction du label de la structure d'échantillonnage,
- utilisation des seuils déterminés aux étapes précédentes pour la mise en oeuvre d'une méthode de rendu en demi ton.

Avantageusement l'invention est aussi **caractérisée en ce que** la méthode de rendu en demi ton mise en oeuvre est une méthode par matrice de seuillage.

Avantageusement l'invention est aussi **caractérisée en ce que** la méthode de rendu en demi ton mise en oeuvre est un algorithme de diffusion d'erreur.

Avantageusement l'invention est aussi **caractérisée en ce que** les structures de subdivision sont des polygones.

Avantageusement l'invention est aussi **caractérisée en ce que** les polygones sont des triangles.

Avantageusement l'invention est aussi **caractérisée en ce que** le label d'une nouvelle structure est dérivé du label de la structure à partir de laquelle elle a été créée.

Avantageusement l'invention est aussi **caractérisée en ce qu'**avant l'utilisation des seuils déterminés aux étapes précédentes pour la mise en oeuvre d'une méthode de rendu en demi ton, le dispositif de tramage met en oeuvre un algorithme de relaxation sur les structures d'échantillonnages pour déterminer les vecteurs de correction de la table de correction.

Avantageusement l'invention est aussi **caractérisée en ce que** lors de la subdivision d'une structure de subdivision en deux nouvelles structures de subdivision, le rapport des aires des nouvelles structures est constant pour toutes les subdivisions.

Avantageusement l'invention est aussi **caractérisée en ce que** le rapport vaut le nombre d'or au carré dont une valeur arrondie à la deuxième décimale est 1.61.

Avantageusement l'invention est aussi **caractérisée en ce que** le label associé à chaque structure est binaire, on utilise les 6 bits de poids forts de ce label pour produire la première entrée, la valeur de chacun de ces bits étant multipliés par Fi ou i est dans l'intervalle [2, 7], et Fi est le nombre correspondant de la suite de Fibonacci, le bit de poids fort étant multiplié par F7, le bit de poids inférieur par F6, et ainsi de suite jusqu'au sixième bit de poids fort.

Avantageusement l'invention est aussi **caractérisée en ce que** la deuxième entrée vaut:

$$\log_{phi^2}(v5 \cdot x) \bmod 1$$

où phi est le nombre d'or, et x l'intensité de l'image associée à la structure d'échantillonnage, l'intervalle [0, 1] réel étant divisé en N intervalles ce qui permet d'associé le résultat de fonction précédente à un entier dans l'intervalle [0, N-1], cet entier étant la deuxième entrée.

Avantageusement l'invention est aussi **caractérisée en ce que** N vaut 8.

Avantageusement l'invention est aussi **caractérisée en ce que** l'image à traiter est divisée en blocs, chacun de ces blocs étant traité par le procédé.

L'invention sera mieux comprise à la lecture de la description qui suit et à l'examen des figures qui l'accompagnent. Celles-ci sont présentées à titre indicatif et nullement limitatif de l'invention. Les figures montrent:

Figure 1: une illustration d'étape du procédé selon l'invention.
Figure 2a, 2b, 2c: illustrations de règles de subdivisions.

Les étapes du procédé selon l'invention sont mises en oeuvre par un dispositif de tramage d'une image. Un tel dispositif lit une image dans une mémoire et produit une image tramée enregistrée dans une autre mémoire ou directement imprimé sur un support physique de type papier. Dans l'invention une image ou un bloc d'image, est assimilable à une matrice de point aussi appelé pixel, chaque pixel ayant des coordonnées dans la matrice, et à chaque pixel étant associé une intensité. Dans notre exemple on considère que l'intensité est codée par un octet, c'est à dire à une valeur entière comprise dans l'intervalle [0, 255].

D'une manière générale, lorsque l'on attribue une action à un appareil, cette action est réalisée par un microprocesseur de l'appareil commandé par des codes instructions enregistrés dans une mémoire de l'appareil.

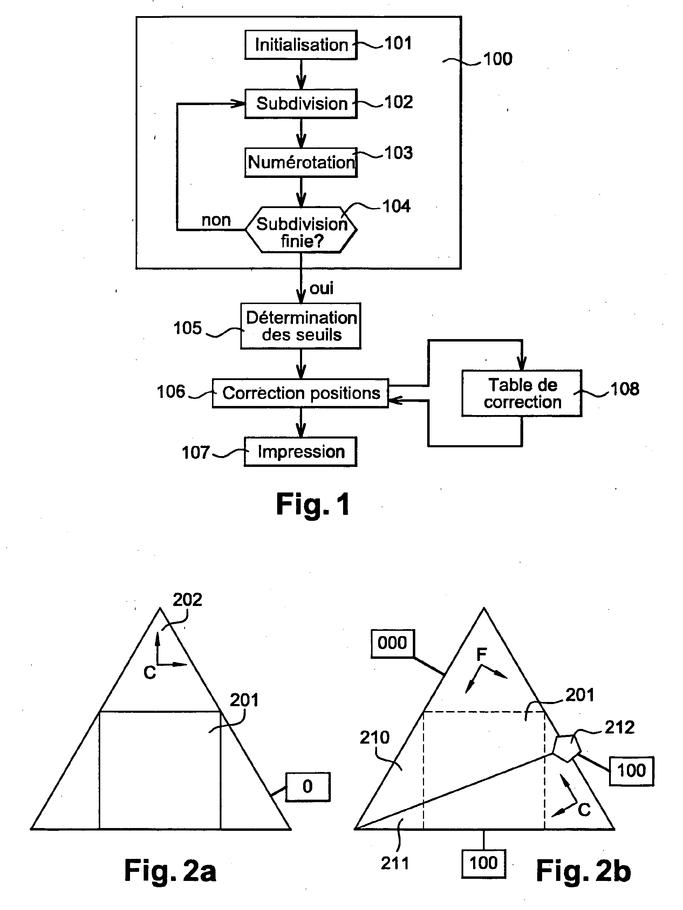

La figure 1 montre une étape 100 de pavage d'une image par une structure apériodique. Dans ce document paver signifie que l'on superpose sur une image une structure apériodique. Dans l'état de la technique le fait de paver une image par une structure apériodique est connu, notamment par les documents US4894726, US5179448, et US 5379118. Ces aspects sont aussi discutés dans l'ouvrage 'Tilings and Patterns' des messieurs Grünbaum et Shephard. Ces documents illustre le pavage de Penrose, mais il en existe d'autre pavage comme le pavage D'Ammann Beeker. On rappel ici les principes de base de la réalisation d'un tel pavage.

La figure 1 montre une étape 101 d'initialisation du processus de pavage dans lequel on superpose sur une image une structure 202 de départ du pavage. La structure 202 est dans notre exemple simplifié un triangle dont les dimensions suffisent à contenir l'image 201. Dans la pratique la structure 202 peu être plus complexe et être elle-même divisée en plusieurs structures. La structure 202 est associée, toujours dans un exemple, au label 0. La structure 202 est une structure dite de subdivision.

De l'étape 101 on passe à une étape 102 de subdivision. Dans cette étape on subdivise toutes les structures de subdivision résultant de l'étape de subdivision précédente selon des règles prédéterminées. Cela permet d'obtenir de nouvelles structures de subdivision et de nouvelles structures d'échantillonnage.

Dans la pratique une structure de subdivision est une structure qui va être subdivisée au cours du processus de subdivision, alors qu'une structure d'échantillonnage est assimilable à un point et associée à un pixel de l'image pavée. Le résultat du processus de subdivision étant un nuage de structures d'échantillonnage donc de pixels. Un nuage de pixels est un ensemble de pixels ayant une dispersion spatiale plane. Chaque pixel sera alors traité en fonction de la structure d'échantillonnage à laquelle il est associé. Dans ce processus, pour une image donnée, le nuage de structures d'échantillonnages est invariant, alors que le nuage de pixel va être modifié en fonction du nuage de structures d'échantillonnages.

La figure montre le résultat de l'étape 102 appliquée au résultat de l'étape 101 d'initialisation. La figure 2b montre que la structure triangulaire 202 a été subdivisée en deux structures triangulaires de subdivision 210 et 211, et une structure d'échantillonnage 212. La structure d'échantillonnage 212 étant l'intersection des cotés communs des deux triangles 210 et 211. Une règle pour l'obtention des triangles 210 et 211 pouvant être que le rapport de leur surface doit être le nombre d'or au carré. Le nombre d'or, arrondie à la deuxième décimal valant 1.61.

De l'étape 102 on passe à une étape 103 de numérotation des nouvelles structures. Dans l'étape 103 on affecte à chaque nouvelle structure un label dépendant du label de la structure dont les nouvelles structures sont issues. Ainsi sur si la structure 202 est associée au label 0, alors les labels des structures 210 à 212 comporteront 0 complété selon une règle prédéterminée. Dans un exemple le résultat de l'application de ces règles est que le label de la structure 210 est 000, le label de la structure 211 est 100, et le label de la structure 212 est 100.

Ces étapes de subdivision sont répété, chaque structure de subdivision étant à nouveau subdivisée et les structures résultantes nommées. Le processus de subdivision s'arrête lorsqu'un critère de fin de subdivision est vérifié.

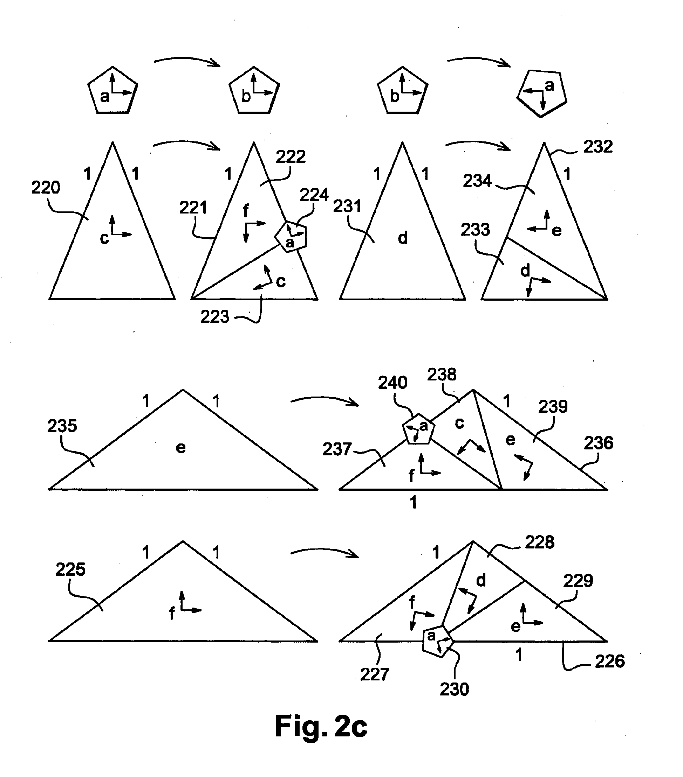

Dans la pratique chaque structure de subdivision et d'échantillonnage est d'un type donné. A chaque type correspond une règle de subdivision pour les structures de subdivision, et éventuellement une règle de changement de type pour les structures d'échantillonnage. A chaque type de structure correspond aussi une règle de détermination du label. Ces règles sont connues dans le cas des pavages déjà cités. La figure 2c illustre d'autres règles utilisables pour la réalisation d'un pavage apériodique.

Dans un exemple de réalisation on définit 6 types de structures, 2 types de structure d'échantillonnage, et 4 types de structures de subdivision. Les types des structures d'échantillonnage sont nommés a et b. Les type des structures de subdivision sont nommée c, d, e et f. Chacune de ces structures est orientée.

Dans notre exemple les structures de subdivision sont des triangles isocèles. Le sommet d'un tel triangle étant l'intersection des ses cotés de longueurs égales. La base d'un tel triangle étant le coté opposé au sommet. Dans ce document les intersections des bords d'un triangle n'étant pas le sommet sont appelées des coins. Un coté d'un tel triangle n'est pas la base.

Les structures de type a et b sont soumis à des règles de changement de type. A chaque itération de l'étape 102, les structures de type a deviennent des structures de type b en conservant la même orientation. Les structures de type b deviennent des structures de type a ayant subi une rotation de 180°. Les labels des nouvelles structures de types a et b ainsi obtenues dérivent des règles suivantes:

- le label de la nouvelle structure a est 00 suivi du label de la structure b d'origine,
- le label de la nouvelle structure b est 00 suivi du label de la structure a d'origine.

La figure 2c montre une structure 220 triangulaire de type c qui est en fait un triangle isocèle. Si les cotés du triangle de type c ont une valeur valant 1, c'est à dire correspondant à l'unité, la base ayant une longueur valant l'inverse du nombre d'or exprimé dans l'unité précédemment définie. Dans notre exemple la structure 202 est de type c. La référence 221 illustre la règle de subdivision d'une structure de type c. Ainsi un triangle de type c est subdivisé en deux triangles dont un triangle 222 de type f, un triangle 223 de type c, et en une structure 224 d'échantillonnage de type a. La référence 221 montre que la subdivision de la structure 220 produit aussi la structure d'échantillonnage 224, celle ci étant située au sommet du triangle 222. Le coté commun aux triangles 222 et 223 est tracé à partir du coin gauche du triangle 220 le triangle 220 étant orienté sommet vers le haut, les triangles 222 et 223 étant isocèles, et le sommet du triangle 223 étant le coin gauche du triangle 220.

Les labels des nouvelles structures de types a, c et b ainsi obtenues dérivent des règles suivantes:

- le label de la nouvelle structure a est 10 suivi du label de la structure c d'origine,
- le label de la nouvelle structure c est 10 suivi du label de la structure c d'origine,
- le label de la nouvelle structure f est 00 suivi du label de la structure c d'origine.

La figure 2c montre une structure 225 triangulaire de type f qui est en fait un triangle isocèle. Si les cotés du triangle de type f ont une valeur valant 1, c'est à dire correspondant à l'unité, la base a une longueur valant le nombre d'or exprimé dans l'unité précédemment définie. La référence 226 illustre la règle de subdivision d'une structure de type f. Ainsi un triangle de type f est subdivisé en trois triangles dont un triangle 227 de type f, un triangle 228 de type d, un triangle 229 de type e, et en une structure 230 d'échantillonnage de type a. On considère le triangle 225 sommet orienté vers le haut. Le triangle 227 est obtenu en subdivisant le triangle 225 en deux, selon une droite issue du sommet du triangle 225 et interceptant la base du triangle 225 à une distance de 1 du coin droit du triangle 225. Le triangle 227 est la partie gauche du triangle 225 ainsi subdivisé. La partie droite résultant de cette première subdivision est à nouveau divisée, par une deuxième subdivision, selon une droite issue du sommet du triangle 227 et interceptant le coté droit du triangle 225 à une distance valant l'inverse du nombre d'or au carré du sommet du triangle 225. La partie droite de la deuxième subdivision est le triangle 229, l'autre partie étant le triangle 228. La structure d'échantillonnage 230 correspond au sommet commun des triangles 227 et 228.

Les labels des nouvelles structures de types a, d, e et f ainsi obtenues dérivent des règles suivantes:

- le label de la nouvelle structure a est 01 suivi du label de la structure f d'origine,
- le label de la nouvelle structure d est 10 suivi du label de la structure f d'origine,
- le label de la nouvelle structure e est 00 suivi du label de la structure f d'origine,
- le label de la nouvelle structure f est 01 suivi du label de la structure f d'origine,

La figure 2c montre une structure 231 triangulaire de type d qui est en fait un triangle isocèle. Si les cotés du triangle de type d ont une valeur valant 1, c'est à dire correspondant à l'unité, la base a une longueur valant l'inverse du nombre d'or exprimé dans l'unité précédemment définie. La référence 232 illustre la règle de subdivision d'une structure de type d. Ainsi un triangle de type d est subdivisé en deux triangles dont un triangle 233 de type d, et un triangle 234 de type e. Le coté commun aux triangles 233 et 234 est tracé à partir du coin droit du triangle 231 le triangle 231 étant orienté sommet vers le haut, les triangles 233 et 234 étant isocèles, et le sommet du triangle 233 étant le coin droit du triangle 231.

Les labels des nouvelles structures de types d et e ainsi obtenues dérivent des règles suivantes:

- le label de la nouvelle structure d est 10 suivi du label de la structure d d'origine,
- le label de la nouvelle structure e est 00 suivi du label de la structure d d'origine, La figure 2c montre une structure 235 triangulaire de type e qui est en fait un triangle isocèle. Si les cotés du triangle de type e ont une valeur valant 1, c'est à dire correspondant à l'unité, la base a une longueur valant le nombre d'or exprimé dans l'unité précédemment définie. La référence 236 illustre la règle de subdivision d'une structure de type e. Ainsi un triangle de type e est subdivisé en trois triangles dont un triangle 237 de type f, un triangle 238 de type c, un triangle 239 de type e, et en une structure 240 d'échantillonnage de type a. On considère le triangle 235 sommet orienté vers le haut. Le triangle 239 est obtenu en subdivisant le triangle 235 en deux, selon une droite issue du sommet du triangle 235 et interceptant la base du triangle 235 à une distance de 1 du coin gauche du triangle 235. Le triangle 239 est la partie droite du triangle 235 ainsi subdivisé.

La partie gauche résultant de cette première subdivision est à nouveau divisée, par une deuxième subdivision, selon une droite issue du sommet du triangle 239 et interceptant le coté gauche du triangle 235 à une distance valant l'inverse du nombre d'or au carré du sommet du triangle 235. La partie droite de la deuxième subdivision est le triangle 238, l'autre partie étant le triangle 237. La structure d'échantillonnage 240 correspond au sommet du triangle 237.

Les labels des nouvelles structures de types a, c, e et f ainsi obtenues dérivent des règles suivantes:

- le label de la nouvelle structure a est 10 suivi du label de la structure e d'origine,
- le label de la nouvelle structure c est 10 suivi du label de la structure e d'origine,
- le label de la nouvelle structure e est 01 suivi du label de la structure e d'origine,
- le label de la nouvelle structure f est 00 suivi du label de la structure e d'origine,

Une fois les structures de subdivision subdivisées et nommées conformément à leur origine on passe à une étape d'évaluation d'un critère de fin de subdivision. Dans la pratique, chaque nouvelle structure de subdivision est subdivisée à nouveau tant qu'un critère de fin du processus n'est pas atteint.

Dans l'invention ce critère est double. La première condition est que la densité de structure d'échantillonnage par unité de surface doit être inférieure à un seuil prédéterminé. Si ce seuil est franchi, le processus de subdivision s'arrête. Cela est équivalent à fixer une surface minimale pour la surface des structures de subdivision.

L'autre partie du critère de fin de subdivision est un critère d'intensité de l'image. La subdivision dans une zone de l'image s'arrête dès que l'intensité de l'image dans une structure de subdivision devient inférieure à un seuil prédéterminé. Cette condition rend le processus de subdivision adaptatif, c'est-à-dire que le processus de subdivision s'adapte à la nature de l'image en d'autre terme, une structure de subdivision correspondant à une zone de l'image de faible intensité ne sera plus subdivisée

Dans une variante le critère d'arrêt de subdivision est tel que la subdivision s'arrête lorsque le nombre de subdivision défini par les niveaux de gris qui se trouve à l'intérieur de la structure de subdivision est atteint. Pour un niveau de gris x, le nombre de subdivision est donné, par exemple, par la formule suivante:

$$?(x) = \log_{phi^2}(v5 \cdot x).$$

Pour chaque structure de subdivision on considère le nombre N de subdivision qu'il a fallu réaliser pour obtenir cette subdivision. On calcul alors ?(x) pour chacun des sommets de la structure de subdivision. On interrompt la subdivision de la structure si aucun des ?(x) calculés n'est supérieur à N.

Dans une autre variante on implique d'autres points de la structure de subdivision, ou les centres des structures d'échantillonnages associés à la structure de subdivision dont on évalue le critère d'arrêt. Dans ces variantes on associe donc à chaque structure de subdivision un nombre de subdivision qu'il a fallu effectuer pour parvenir à cette structure de subdivision.

On vient d'illustrer un exemple de pavage apériodique basé sur l'utilisation de triangles. Le pavage de Penrose met en oeuvre des quadrilatères. Le pavage d'Amman Beeker met en oeuvre des polygones bien plus complexe. L'intérêt de l'utilisation des triangles réside dans leur structure simple facilitant les calculs pour réaliser le pavage.

L'utilisation des dimensions en rapport avec le nombre d'or permet de subdiviser les structures de subdivision en structures dont le rapport des aires vaut le nombre d'or au carré.

Une fois le pavage terminé, on passe de l'étape 104 à une étape 105 de détermination des seuils. Ces seuils sont ceux qui sont utilisés pour la mise en oeuvre des algorithmes par matrice de seuillage, ou par diffusion d'erreur. Dans le cas de l'utilisation de la diffusion d'erreur on peut fixer le seuil à environ 127, c'est-à-dire le milieu de la dynamique des pixels qui sont codés avec une intensité qui est dans l'intervalle [0..255]. Dans la pratique le seuil est lui dans l'intervalle [124..128], avec la dynamique précédemment envisagée. Dans l'invention à chaque structure d'échantillonnage est associé un seuil. Dans une variante de l'invention les seuils sont dépendants des labels associés aux structures d'échantillonnage. Par exemple, le label de l'invention est converti dans une base décimal depuis son expression binaire. On applique ensuite à cette conversion une fonction dont l'espace d'arrivée est l'intervalle [0..255]. Cette conversion est réalisée, par exemple, dans une base dont les vecteurs de description sont les éléments de la suite de Fibonacci, comme cela est décrit ultérieurement pour la production de la première entrée dans la table des vecteurs de correction. Dans ce cas on utilise autant d'éléments de la suite de Fibonacci que le label comporte de digit, en commençant par le deuxième élément de la suite de Fibonacci.

De l'étape 105 on passe à une étape 106 de correction des positions des structures d'échantillonnage. Comme déjà précisé, chaque structure d'échantillonnage correspond à un pixel de l'image sur laquelle est réalisé le pavage. Dans l'étape 106 on modifie, avant impression, la position des structures d'échantillonnage, donc la position des pixels associés à ces structures d'échantillonnage. Cette correction est aussi appelé une relaxation ou un processus de relaxation

Cette correction est réalisée en fonction d'une table de correction comportant des vecteurs de correction. Une table de correction permet d'associer à chaque structure d'échantillonnage un vecteur de correction. Une table de correction a deux entrées. Une première entrée est dépendante du label de la structure d'échantillonnage.

Comme précédemment illustré le label associé à chaque structure, en particulier d'échantillonnage, est binaire. On utilise les 6 bits de poids forts de ce label pour produire la première entrée, la valeur de chacun de ces bits étant multipliés par Fi ou i est dans l'intervalle [2, 7], et Fi est le nombre correspondant de la suite de Fibonacci, le bit de poids fort étant multiplié par F7, le bit de poids inférieur par F6, et ainsi de suite jusqu'au sixième bit de poids fort.

Ainsi pour une structure d'échantillonnage dont le label est:

10101010101

la valeur de la première entrée est

$$1 \times F7 + 0 \times F6 + 1 \times F5 + 0 \times F4 + 1 \times F3 + 0 \times F2$$

soit

$$1 \times 13 + 0 \times 8 + 1 \times 5 + 0 \times 3 + 1 \times 2 + 0 \times 1 = 20$$

On a ici adoptée la convention suivante pour la suite de Fibonacci: F0 = 0, F1 = 1, F2 = 1, F3 = 2, F4 = 3, F5 = 5, F6 = 8, F7 = 13. Cette suite se poursuit, mais dans le cadre de l'invention seul ses 8 premier termes sont intéressants pour la définition de la première entrée.

On note qu'avec le mode d'attribution des labels choisi, un label ne peut pas contenir deux 1 consécutif. Les valeurs pour la première entrée sont donc dans l'intervalle entier [0, 20]. La première entrée est appelée indice structurel.

Une deuxième entrée dans une table de correction est dépendante de l'intensité du pixel associé à la structure d'échantillonnage.

Dans un mode de réalisation la deuxième entrée vaut:

$$\log_{phi^{2}}(v5 \, . \, x) \bmod 1$$

où phi est le nombre d'or, et x l'intensité de l'image associée à la structure d'échantillonnage. L'intervalle [0, 1] réel d'arrivé de la fonction est divisé en N intervalles ce qui permet d'associé le résultat de fonction précédente à un entier dans l'intervalle [0, N-1], cet entier étant alors la deuxième entrée. Cette deuxième entrée est appelée indice d'importance.

Dans un exemple N vaut 8, est l'intervalle réel [0, 1] est divisé en N intervalles disjoint de tailles identiques et tel que leur union soit l'intervalle réel [0, 1]. Dans cet exemple la deuxième entrée est comprise dans l'intervalle entier [0, 7].

Ainsi dans l'exemple choisi la table des vecteurs de correction est de dimension 21 x 8 = 168. Ces 168 vecteurs de correction sont prédéterminés. Une telle table est par exemple la suivante.

| | 0 | 1 | 2 | 3 | 4 | 5 | 6 | 7 |
|---|---|---|---|---|---|---|---|---|
| 0 | (-.014,.018) | (.025,-.082) | (.049,-.097) | (.055,-.090) | (.038,-.074) | (-.006,-.058) | (-.027,-.028) | (-.018,.012) |
| 1 | (.013,-.007) | (-.133,-.292) | (-.208,-.358) | (-.197,-.380) | (-.129,-.323) | (-.066,-.266) | (-.029,-.218) | (-.004,-.204) |
| 2 | (.011,-.343) | (.079,-.563) | (.095,-.604) | (.072,-.583) | (-.053,-.504) | (-.144,-.383) | (-.170,-.265) | (-.124,-.172) |
| 3 | (.014,-.197) | (.085,-.233) | (.148,-.106) | (.236,.143) | (.317,.307) | (.345,.364) | (.296,.330) | (.198,.233) |
| 4 | (.036,.044) | (.180,-.014) | (.278,.078) | (.330,.222) | (.348,.358) | (.350,.386) | (.300,.367) | (.215,.301) |
| 5 | (.227,.365) | (.363,.061) | (.342,-.094) | (.268,-.156) | (.152,-.091) | (.004,.082) | (-.060,.256) | (-.039,.392) |
| 6 | (.171,.446) | (.301,-.089) | (.243,-.224) | (.132,-.229) | (-.052,-.258) | (-.228,-.155) | (-.266,-.013) | (-.200,.140) |
| 7 | (-.235,.391) | (-.580,.059) | (-.651,-.114) | (-.709,-.313) | (-.720,-.432) | (-.694,-.411) | (-.593,-.245) | (-.473,-.057) |
| 8 | (-.002,1.019) | (.801,.846) | (.118,.731) | (.168,.560) | (.182,.381) | (.221,.263) | (.216,.253) | (.197,.294) |
| 9 | (0,0) | (-.125,.256) | (-.108,.273) | (-.065,.249) | (.006,.171) | (.064,.086) | (.084,.026) | (.072.-.013) |
| 10 | (0,0) | (-.047,.030) | (-.104,.082) | (-.146,.159) | (-.173,.219) | (-.173,.221) | (-.151,.144) | (-.134,.077) |
| 11 | (0,0) | (-.070,.251) | (-.147,.532) | (-.177,.710) | (-.199,.735) | (-.187,.607) | (-.160,.366) | (-.114,.206) |
| 12 | (0,0) | (.001,.045) | (.003,.124) | (.009,.290) | (.012,.354) | (.011,.324) | (.010,.182) | (.019,.065) |
| 13 | (0,0) | (0,0) | (.020,.012) | (.063,.041) | (.148,.096) | (.198,.131) | (.218,.131) | (.212,.120) |
| 14 | (0,0) | (0,0) | (.017,.026) | (.048,.074) | (.107,.166) | (.124,.194) | (.117,.190) | (.099,.165) |
| 15 | (0,0) | (0,0) | (0,0) | (.012,.025) | (.038,.073) | (.092,.168) | (.124,.199) | (.138,203) |
| 16 | (0,0) | (0,0) | (0,0) | (-.009,.009) | (-.024,.035) | (-.501,.094) | (-.044,.158) | (-0.33,.203) |
| 17 | (0,0) | (0,0) | (0,0) | (0,0) | (-.008,.018) | (-.025,058) | (-.051,.136) | (-.059,.184) |
| 18 | (0,0) | (0,0) | (0,0) | (0,0) | (.004,.010) | (.003,.031) | (-.011,.069) | (-.049,.090) |
| 19 | (0,0) | (0,0) | (0,0) | (0,0) | (0,0) | (.016,.013) | (-.045,.030) | (-.100,.067) |

(suite)

| | 0 | 1 | 2 | 3 | 4 | 5 | 6 | 7 |
|---|---|---|---|---|---|---|---|---|
| 20 | (0,0) | (0,0) | (0,0) | (0,0) | (0,0) | (-.010,.034) | (-.029..078) | (-.064,.174) |

Ces vecteurs de corrections sont appliqués à la position des pixels associés à chaque structure d'échantillonnage issue du processus de pavage. Ainsi les structures d'échantillonnages ne sont pas affectées par le processus de relaxation lié à la table de correction. Seuls les pixels liés à ces structures d'échantillonnage sont affecté par ce processus de relaxation.

Le corrections sont exprimées dans une unité relative à la structure d'échantillonnage à laquelle la correction est apportée. Selon le procédé de l'invention chaque structure d'échantillonnage est attachée à une structure de subdivision pour laquelle une unité est définie. Pour une structure d'échantillonnage donnée, c'est cette unité qui est utilisée pour l'interprétation des vecteurs de correction.

De l'étape 106 on passe à une étape 107 d'impression dans laquelle le dispositif de tramage d'image imprime, ou écrit dans une mémoire ou affiche sur un écran, les pixels seuilés correspondant aux structures d'échantillonnage obtenues par le procédé décrit. Ce procédé permet donc d'associer à un pixel une structure d'échantillonnage, donc un seuil permettant de décider s'il faut imprimer ou non le pixel, et un vecteur de correction permettant de déplacer le pixel par rapport à sa position d'origine. Dans la pratique un pixel n'est imprimé que si sa valeur est supérieur au seuil qui lui est associé. Cela est valable pour l'ensemble des pixels d'une image. Dans une variante le critère inverse est utilisé.

On rappel ici qu'un algorithme de diffusion d'erreur est aussi basé sur le seuillage, mais l'erreur qui est faite entre le pixel que l'on trame et la valeur de sortie que l'on choisit (0 ou 255) est diffusée dans le voisinage non traité du pixel que l'on trame. Le voisinage est constitué par les pixels immédiatement voisin de ceux que l'on traite. L'erreur est diffusé pondérée par un coefficient. Chaque voisin ayant son propre coefficient. De tels coefficients, et cet algorithme, on été défini dès 1975 par Floyd et Steinberg. Dans la pratique on utilise les coefficients défini par Floyd, mais rien dans l'invention ne s'oppose à la mise en oeuvre d'un autre jeu de coefficients.

Ainsi la distribution selon le pavage de Penrose décrite ne fait qu'attribuer certaines valeurs de seuils dans une matrice utilisées dans la mise en oeuvre d'un algorithme de diffusion d'erreur, ou d'un algorithme par matrice de seuillage.

Dès lors le procédé selon l'invention se récapitule comme suit:

1. On récupère un bloc d'une image d'un dimension donnée, et on initialise une matrice (appelée matrice de seuil) de la même taille que le bloc de l'image avec la valeur représentant la moitié du diapason dynamique (127 dans notre cas)

    a. On effectue la subdivision adaptative de l'image pour créer un pavage

        i. Chaque structure de subdivision est subdivisé jusqu'à ce qu'un critère d'arrêt soit atteint.

    b. A partir du pavage on crée une matrice de points d'échantillonnage. Pour chaque structure d'échantillonnage :

        i. On calcul un seuil associé en fonction du label
        ii. On récupère ses coordonnées définies dans $R^2$
        iii. On y applique la correction en utilisation l'indice structurel et l'indice d'importance
        iv. On discrétise les coordonnées corrigées pour obtenir les coordonnées discrètes d'un point de la matrice de seuil
        v. On insère le seuil calculé dans l'étape (i.) dans la matrice de seuil à la position calculée dans l'étape (iv.)

    c. On applique l'algorithme de diffusion d'erreur. L'algorithme est appliqué à l'intérieur du bloc d'image, et pour chaque pixel on utilise le seuil venant de la matrice de seuils.

Le procédé ainsi mis en oeuvre permet de s'affranchir des tous les artefacts qu'un procédé de tramage moins sophistiqué laisse subsister.

Ce procédé présente l'avantage de pouvoir être mis en oeuvre soit sur une image complète, soit sur des blocs de cette image. Dans un exemple classique, un bloc a une dimension de 16 pixels par 16 pixels, ou 32 pixels par 32 pixels. Le procédé selon l'invention étant tout à fait applicable à des blocs plus grands, mais cela n'est pas la cas dans le cadre d'une impression classique. Bien sur, classiquement, dans les cas de traitement par bloc, les erreurs aux extrémités des blocs (bord droit, et bord du bas) sont transmis aux blocs voisins.

EP 1 784 973 B1

Dans un exemple de mise en oeuvre préféré les vecteurs de la table de correction sont précalculés dans une étape 108 préalable à l'étape 106, selon un procédé mettant en oeuvre le procédé de pavage utilisé par l'invention. Les vecteurs de la table de correction sont indépendants de l'image traitée. Un mode de production de la table des vecteurs de correction est maintenant décrit.

Dans une étape préliminaire on initialise la table des vecteurs de correction, tous les vecteurs étant nuls (0, 0).

Pour chaque indice d'importance on produit, par exemple de manière aléatoire, une image comportant un nuage de points dont les niveaux de gris correspondent à l'indice d'importance. Pour cette image on réalise un pavage selon le, procédé mis en oeuvre par l'invention, ce qui permet d'obtenir des structures d'échantillonnage à des positions données. On applique alors à ces structures d'échantillonnage, chacune étant considérée comme un point et étant associé à un indice structurel, un algorithme de relaxation, par exemple l'algorithme de Lloyd.

De manière simplifiée l'algorithme de Lloyd s'exprime comme suit:

1. On prend un ensemble de points (en l'espèce les structures d'échantillonnage),
2. On effectue la polygonisation de Voronoï sur l'ensemble de points,
3. Pour chaque polygone entourant les points on calcul le barycentre, et on déplace le point générateur du polygone vers le barycentre,
4. On répète l'étape 2. et 3. jusqu'à convergence

Puis pour chaque indice structurel on calcul la moyenne Vm des déplacements des points par rapport à leurs positions d'origines. Cette moyenne est utilisée pour calculer le vecteur de correction moyen avec le vecteur déjà présent dans la table de correction. La table est donc mise à jour selon la formule

$$V = (k.V + Vm) / (k + 1)$$

Ou k est le nombre de nuages de points déjà produit pour l'indice d'importance.

On répète ces opérations pour jusqu'à stabilisation des vecteurs de correction, c'est-à-dire jusqu'à ce que la contribution de Vm devienne négligeable pour la valeur V.

Une fois la table obtenue on effectue l'équivalent d'un filtrage via un filtre passe bas, ce qui a pour effet d'annuler un certain nombre de vecteurs de correction.

Ces étapes, correspondant à l'étape 108, permettent de déterminer une table de vecteurs de correction utilisable par le procédé selon l'invention. Dans la mesure on la table de correction, que l'on peut aussi appeler table de relaxation, est précalculée, le procédé selon l'invention est particulièrement performant. Ces étapes ne sont effectuées qu'une fois pour tous les dispositifs de tramage mettant en oeuvre le procédé selon l'invention en utilisant une méthode de pavage donnée. Dans la pratique l'étape 108 n'est donc pas mise en oeuvre par le dispositif de tramage, mais le résultat de l'étape 108 est stocké dans une mémoire du dispositif de tramage.

**Revendications**

1. Procédé de tramage d'une image avant impression **caractérisé en ce qu'**il comporte les étapes suivantes, mises en oeuvre par un dispositif de tramage:

   - pavage (100) de l'image à tramer par une structure apériodique obtenu par la mise en oeuvre d'une structure auto-similaire, c'est-à-dire que le pavage est réalisé à partir d'une structure divisée (102) selon des règles de manière à donner de nouvelles structures qui sont à nouveau divisée selon ces mêmes règles, parmi les structures on distingue des structures d'échantillonnage et des structures de subdivision, les structures d'échantillonnage étant assimilables à des points, seules les structures de subdivision sont à nouveau divisée.
   - le pavage est adaptatif car dépendant de l'intensité de la zone de l'image couverte par la structure à diviser, la division de la structure étant interrompue (104) lorsque que cette intensité devient inférieure à un seuil prédéterminé,
   - la division est interrompue (104) lorsque la densité de structure par unité de surface de l'image devient supérieure à un seuil,
   - lors de chaque division le dispositif de tramage affecte (103) un label à chaque nouvelle structure, ainsi qu'aux structures d'échantillonnage existantes.
   - à la fin du processus de pavage chaque structure d'échantillonnage est associée à un pixel qui est déplacé (106) en fonction d'un vecteur de correction lu dans une table correction à double entrée, la première des entrées étant dépendante label de la structure d'échantillonnage, la seconde des entrées étant dépendante de l'intensité de l'image au point correspondant à la structure d'échantillonnage, chaque structure d'échantillonnage restant associé au point de l'image lui ayant servi d'entrée dans la table de correction,
- à chaque structure d'échantillonnage est associé (105) un seuil en fonction du label de la structure d'échantillonnage,
- utilisation des seuils déterminés aux étapes précédentes pour la mise en oeuvre (107) d'une méthode de rendu en demi ton.

**2.** Procédé selon la revendication 1 **caractérisé en ce que** la méthode de rendu en demi ton mise en oeuvre est une méthode par matrice de seuillage.

**3.** Procédé selon la revendication 1, **caractérisé en ce que** la méthode de rendu en demi ton mise en oeuvre est un algorithme de diffusion d'erreur.

**4.** Procédé selon l'une des revendications 1 à 3, **caractérisé en ce que** les structures de subdivision sont des polygones.

**5.** procédé selon la revendication 4, **caractérisé en ce que** les polygones sont des triangles (202).

**6.** Procédé selon l'une des revendications 1 à 5, **caractérisé en ce que** le label d'une nouvelle structure est dérivé (103) du label de la structure à partir de laquelle elle a été créée.

**7.** Procédé selon l'une des revendications 1 à 6, **caractérisé en ce qu'**avant l'utilisation des seuils déterminés aux étapes précédentes pour la mise en oeuvre d'une méthode de rendu en demi ton, le dispositif de tramage met en oeuvre (108) un algorithme de relaxation sur des structures d'échantillonnages pour produire les vecteurs de correction de la table de correction.

**8.** Procédé selon l'une des revendications 1 à 7, **caractérisé en ce que** lors de la subdivision d'une structure de subdivision en deux nouvelles structures de subdivision, le rapport des aires des nouvelles structures est constant pour toutes les subdivisions.

**9.** Procédé selon la revendication 8, **caractérisé en ce que** le rapport vaut le nombre d'or au carré, une valeur arrondie à la deuxième décimale du nombre d'or est 1.61.

**10.** Procédé selon l'une des revendications 1 à 9, **caractérisé en ce que** le label associé à chaque structure est binaire, on utilise (106) les 6 bits de poids forts de ce label pour produire la première entrée, la valeur de chacun de ces bits étant multipliés par Fi ou i est dans l'intervalle [2, 7], et Fi est le nombre correspondant de la suite de Fibonacci, le bit de poids fort étant multiplié par F7, le bit de poids inférieur par F6, et ainsi de suite jusqu'au sixième bit de poids fort.

**11.** Procédé selon l'une des revendications 1 à 10, **caractérisé en ce que** la deuxième entrée vaut (106):

$$\log_{phi^2}(v5 \cdot x) \bmod 1$$

où phi est le nombre d'or, et x l'intensité de l'image associée à la structure d'échantillonnage, l'intervalle [0, 1] réel étant divisé en N intervalles ce qui permet d'associé le résultat de fonction précédente à un entier dans l'intervalle [0, N-1], cet entier étant la deuxième entrée.

**12.** Procédé selon la revendication 11, **caractérisé en ce que** N vaut 8.

**13.** Procédé selon l'une des revendications 1 à 12, **caractérisé en ce que** l'image à traiter est divisée en blocs, chacun de ces blocs étant traité par le procédé.

**Claims**

1. Method for screening an image before printing, **characterized in that** it comprises the following steps implemented by a screening device:

   - tiling (100) the image to be screened by an aperiodic structure obtained by the implementation of a self-similar structure, i.e. the tiling is done from a structure divided (102) according to rules to give new structures which are again divided according to these same rules; among the structures, sampling structures and subdivision structures are distinguished, it being possible to liken the sampling structures to dots, and only the subdivision structures are again divided,
   - the tiling is adaptive because it depends on the intensity of the zone of the image covered by the structure to be divided, the division of the structure being interrupted (104) when this intensity becomes lower than a predetermined threshold,
   - the division is interrupted (104) when the density of structure per unit of surface area of the image becomes higher than a threshold,
   - at each division, the screening device assigns (103) a label to each new structure as well as to the existing sampling structures,
   - at the end of the tiling process, each sampling structure is associated with a pixel that is shifted (106) as a function of a correction vector found in a dual-input correction table, the first of the inputs being dependent on the label of the sampling structure, the second of the inputs being dependent on the intensity of the image at the point corresponding to the sampling structure, each sampling structure remaining associated with the dot of the image that has served it as an input in the correction table,
   - each sampling structure has an associated (105) threshold as a function of the label of the sampling structure,
   - the thresholds determined in the previous steps are used to implement (107) a halftone rendering method.

2. Method according to claim 1 **characterized in that** the halftone rendering method implemented is a threshold matrix method.

3. Method according to claim 1, **characterized in that** the halftone rendering method implemented is an error diffusion method.

4. Method according to one of the claims 1 to 3, **characterized in that** the subdivision structures are polygons.

5. Method according to claim 4, **characterized in that** the polygons are triangles (202).

6. Method according to one of the claims 1 to 5, **characterized in that** the label of a new structure is derived (103) from the label of the structure from which it had been created.

7. Method according to one of the claims 1 to 6 **characterized in that,** before the use of the thresholds determined in the preceding steps for the implementation of a halftone rendering method, the screening device implements (108) a relaxation algorithm on the sampling structures to produce the correction vectors of the correction table..

8. Method according to one of the claims 1 to 7, **characterized in that** during the subdivision of a subdivision structure into two new subdivision structures, the ratio of the areas of the new structures is constant for all the subdivisions.

9. Method according to claim 8, **characterized in that** the ratio is equal to the golden ratio squared, one value of which, rounded out to the second decimal point, is 1.61.

10. Method according to one of the claims 1 to 9, **characterized in that** the label associated with the structure is binary, the six most significant bits of this label are used to produce the first input, the value of each of these bits is multiplied by $F_i$ where $i$ is in the interval [2, 7], and $F_i$ is the number corresponding to the Fibonacci sequence, the most significant bit being multiplied by $F_7$, the less significant bit by $F_6$, and so on and so forth up to the sixth most significant bit.

11. Method according to one of the claims 1 to 10, **characterized in that** the second input is equal to (106):

$$\log_{phi^2}(\sqrt{5} \cdot x) \bmod 1$$

where phi is the golden ratio, and x is the intensity of the image associated with the sampling structure, the real interval [0, 1] being divided into N intervals, thus enabling the association of the preceding function result with an integer in the interval [0, N-1], this integer being the second input.

**12.** Method according to claim 11, **characterized in that** N is equal to 8.

**13.** Method according to one of the claims 1 to 12, **characterized in that** the image to be processed is divided into blocks, each of these blocks being processed by the method.

**Patentansprüche**

**1.** Verfahren zum Rastern eines Bildes vor dem Ausdrucken, **dadurch gekennzeichnet, dass** es aus den folgenden Schritten besteht, die von einer Rastervorrichtung umgesetzt werden:

- Pflasterung (100) des zu rasternden Bildes durch eine aperiodische Struktur, die man durch die Umsetzung einer selbstähnlichen Struktur erhält, das heißt, dass die Pflasterung auf der Grundlage einer Struktur erstellt wird, die gewissen Regeln entsprechend unterteilt (102) wird, um neue Strukturen zu schaffen, die dann entsprechend denselben Regeln erneut unterteilt werden, wobei man bei den Strukturen Stichprobenstrukturen und Teilungsstrukturen unterscheidet, und die Stichprobenstrukturen mit Punkten vergleichbar sind und nur die Teilungsstrukturen erneut unterteilt werden.
- die Pflasterung ist anpassbar, da sie von der Intensität der Bildzone abhängt, die von der zu teilenden Struktur bedeckt wird, wobei die Teilung der Struktur unterbrochen (104) wird, sobald diese Intensität unter einen vorbestimmten Grenzwert fällt,
- die Teilung wird unterbrochen (104), wenn die Strukturdichte je Oberflächeneinheit des Bildes über einen Grenzwert hinausgeht,
- bei jeder Teilung ordnet (103) die Rastervorrichtung jeder neuen Struktur, sowie den bestehenden Stichprobenstrukturen einen Label zu.
- am Ende des Pflasterungsprozesses wird jede Stichprobenstruktur einem Bildpunkt zugeordnet, der in Abhängigkeit von einem Korrekturvektor versetzt (106) wird, der aus einer Korrekturtabelle mit doppeltem Eingang ausgelesen wird, wobei der erste Eingang vom Label der Stichprobenstruktur abhängt, und der zweite Eingang von der Bildintensität an jenem Punkt abhängt, der der Stichprobenstruktur entspricht, wobei jede Stichprobenstruktur jenem Punkt des Bildes zugeordnet bleibt, der ihr als Eingang in die Korrekturtabelle gedient hat,
- jeder Stichprobenstruktur wird in Abhängigkeit des Labels der Stichprobenstruktur ein Grenzwert zugeordnet (105),
- die Verwendung der in den vorherigen Schritten bestimmten Grenzwerte zur Umsetzung (107) einer Methode zur Halbton-Wiedergabe.

**2.** Verfahren nach Anspruch 1, **dadurch gekennzeichnet, dass** die umgesetzte Methode zur Halbton-Wiedergabe eine Methode mit Schwellwertmatrix ist.

**3.** Verfahren nach Anspruch 1, **dadurch gekennzeichnet, dass** die umgesetzte Methode zur Halbton-Wiedergabe ein Fehlerverteilungsalgorithmus ist.

**4.** Verfahren nach einem der Ansprüche 1 bis 3, **dadurch gekennzeichnet, dass** die Unterteilungsstrukturen Polygone sind.

**5.** Verfahren nach Anspruch 4, **dadurch gekennzeichnet, dass** die Polygone Dreiecke (202) sind.

**6.** Verfahren nach einem der Ansprüche 1 bis 5, **dadurch gekennzeichnet, dass** der Label einer neuen Struktur vom Label jener Struktur abgeleitet (103) wird, auf deren Basis er erstellt wurde.

**7.** Verfahren nach einem der Ansprüche 1 bis 6, **dadurch gekennzeichnet, dass** die Rastervorrichtung vor der Verwendung der in den vorherigen Schritten bestimmten Grenzwerte zur Umsetzung einer Methode zur Halbton-Wiedergabe einen Relaxationsalgorithmus auf die Stichprobenstrukturen anwendet (108), um die Korrekturvektoren der Korrekturtabelle zu erstellen.

8. Verfahren nach einem der Ansprüche 1 bis 7, **dadurch gekennzeichnet, dass** die Beziehung der Flächen der neuen Strukturen bei der Unterteilung einer Teilungsstruktur in zwei neue Teilungsstrukturen für alle Teilungen konstant ist.

9. Verfahren nach Anspruch 8, **dadurch gekennzeichnet, dass** die Beziehung dem goldenen Schnitt zum Quadrat entspricht, wobei ein auf zwei Kommastellen gerundeter Wert des goldenen Schnitts 1,61 ist.

10. Verfahren nach einem der Ansprüche 1 bis 9, **dadurch gekennzeichnet, dass**, da der den Strukturen zugeordnete Label binär ist, man die 6 starken Bits dieses Labels verwendet (106), um den ersten Eingang zu erstellen, wobei der Wert jedes dieser Bits, der mit Fi oder i multipliziert wird im Intervall [2, 7] liegt, und Fi die Zahl ist, die der Fibonacci-Folge entspricht, und das starke Bit mit F7 multipliziert wird, das schwächer wertige Bit mit F6 und so weiter, bis zum sechsten starken Bit.

11. Verfahren nach einem der Ansprüche 1 bis 10, **dadurch gekennzeichnet, dass** der zweite Eingang folgenden Wert aufweist (106):

$$\text{Log}_{phi^{\wedge}2}(v5.x) \bmod 1$$

wobei phi der goldene Schnitt ist und x die Bildintensität, die der Stichprobenstruktur zugeordnet wird, wobei das reelle Intervall [0, 1] in N Intervalle unterteilt wird, wodurch das Ergebnis der vorherigen Funktion einer Ganzzahl im Intervall [0, N-1] zugeordnet werden kann, wobei diese Ganzzahl der zweite Eingang ist.

12. Verfahren nach Anspruch 11, **dadurch gekennzeichnet, dass** N gleich 8 ist.

13. Verfahren nach einem der Ansprüche 1 bis 12, **dadurch gekennzeichnet, dass** das zu bearbeitende Bild in Blöcke unterteilt wird, wobei jeder dieser Blöcke mit dem Verfahren bearbeitet wird.

**Fig. 1**

**Fig. 2a**

**Fig. 2b**

Fig. 2c

**RÉFÉRENCES CITÉES DANS LA DESCRIPTION**

**Documents brevets cités dans la description**

- US 4894726 A
- US 5179448 A
- US 5379118 A